# EUROPEAN PATENT APPLICATION

(11) **EP 4 216 243 A1**
(43) Date of publication of application: **26.07.2023**
(21) Application number: 23152555.1
(22) Date of filing: 19.01.2023
(51) Int. Cl.: H01F 27/28, H01F 27/29

(54) **MAGNETIC ELEMENT AND POWER MODULE**

(30) Priority: 20.01.2022 CN 202210068306
(71) Applicant: DELTA ELECTRONICS (SHANGHAI) CO., LTD, Shanghai 201209 (CN)
(72) Inventor: HONG, Shouyu, SHANGHAI, 201209 (CN); CHEN, Qingdong, SHANGHAI, 201209 (CN); BI, Shuairan, SHANGHAI, 201209 (CN); WAN, Qian, SHANGHAI, 201209 (CN); WANG, Zengsheng, SHANGHAI, 201209 (CN); ZHOU, Ganyu, SHANGHAI, 201209 (CN); FU, Zhiheng, SHANGHAI, 201209 (CN); ZHOU, Jinping, SHANGHAI, 201209 (CN); YE, Yiqing, SHANGHAI, 201209 (CN)
(74) Representative: Cabinet Beau de Loménie

(57) **Abstract**

The present disclosure provides a magnetic element, including: a magnetic core with at least one magnetic column extending along a first direction; a first winding surrounding the magnetic column; a second winding at least partially surrounding the first winding; and a third winding at least partially surrounding the second winding. The number of turns of the second winding is less than or equal to the number of turns of the first winding. The number of turns of the third winding is less than or equal to the number of turns of the first winding.

## Description

### TECHNICAL FIELD

The present disclosure relates to the field of power supply technologies, and in particular to a magnetic element, a power module and a method for manufacturing a magnetic element.

### BACKGROUND

With the improvement of requirements for smart living, the demand for data processing in society is growing. The global energy consumption on the data processing reaches hundreds of billions or even trillions of degrees per year on average, and a large data center can cover an area up to tens of thousands of square meters. Therefore, high efficiency and high power density are key indicators for the healthy development of this industry.

A critical unit of the data center is a server. A mainboard of the server is typically composed of data processing chips, their power supplies and necessary peripheral components. The data processing chips includes Central Processing Units (CPUs), chipsets, memories, and so on. With the processing capability of the server increasing, the number and integration of the processing chips also increase, resulting in an increase in space occupation and power consumption. The power supplies that power these chips are also referred to as mainboard power supplies. The mainboard power supplies should have higher efficiency, higher power density and smaller volume in order to meet the energy saving and footprint reduction of the entire server and even the entire data center. Thus the switching frequency of the power supply gets higher and higher. In general, the switching frequency of a low-voltage and high-current power supply is basically 1 MHz.

For a low-voltage and high-current application, the achievement of higher power density and higher conversion efficiency is still a problem to be solved at present.

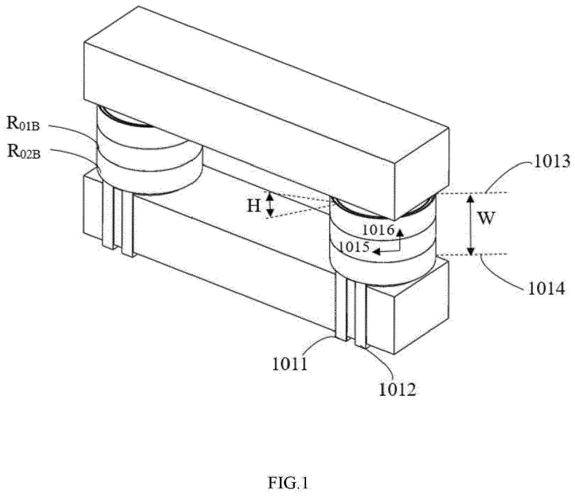

FIG. 1 is a schematic structural diagram of a conventional transformer module. As shown in FIG. 1, windings R_{01B} and R_{02B} wind around two magnetic columns of a magnetic core. The structure includes a winding direction 1015 around the magnetic column, and a winding extension direction 1016 parallel to the magnetic column. A size of the windings parallel to a length direction of the magnetic column is W. The size W is also the size of the windings in their extension direction. And a size of the winding perpendicular to the magnetic column is H, and H is also a thickness of a single-layer winding. When H and W satisfy a relationship of W>10H, the winding wound in this manner is defined as a foil-wound structure winding or a flatwise-wound winding. In the figure, 1011 and 1012 are terminals of the windings, and 1013 and 1014 are boundaries formed by the windings in their extension direction 1016. In the transformer module, the terminals of each winding connected to an external circuit, such as 1011 and 1012 in the figure, are usually led from one side of the winding, and terminals of an inner winding on a magnetic column extend out of the boundary of an outer winding on the same magnetic column in the extension direction. Under such a structure, all current of the winding flow through the terminals, thereby causing winding current distribution non-uniform, and huge losses on the terminals. In addition, the terminals are usually relatively long, which may further exacerbate the loss on them.

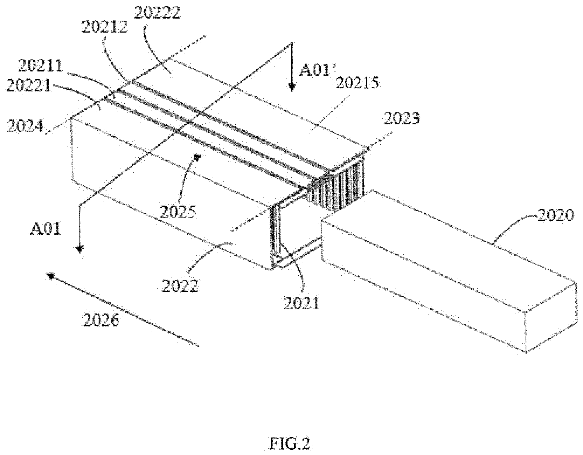

FIG. 2 is a perspective view of another conventional transformer. Windings 2021 and 2022 wind around a magnetic column 2020 to form the inner and outer windings of the transformer. The outer winding 2022 is connected to an external circuit through its two output pads 20221 and 20222, and the inner winding 2021 is connected to the external circuit through two output pads 20211 and 20212. A direction 2025 shows a direction of the windings wingding around the magnetic column, and a direction 2026 shows an extension direction of the windings parallel to the magnetic column. 2023 and 2024 are boundaries formed by the inner or outer winding in its extension direction. There is also an insulating layer (not shown in the figure) between the inner and outer windings. Connection structures of the inner winding 2021 pass through the insulating layer to form the output pads on a surface of the transformer, which are located within the boundaries 2023 and 2024.

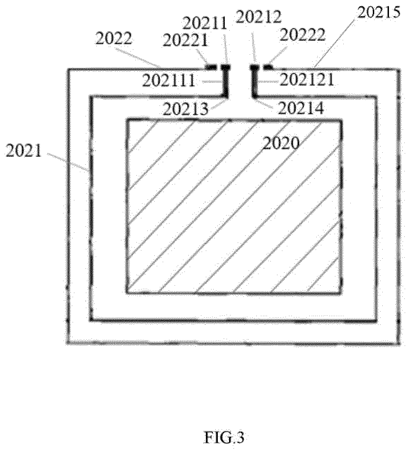

FIG. 3 is a cross-sectional view of the transformer in FIG. 2 along a direction of A01-A01'. As shown in FIG. 3, a shaded portion 2020 is a cross-sectional view of the magnetic core. The output pads 20211 and 20212 are connected to two ends 20213 and 20214 of the inner winding 2021 through the connection structures, such as vias 202111 and 202121, respectively. The terminals of the winding 2021 includes the connection structures 202111 and 202121 and the corresponding output pads 20211 and 20212. And the terminals of the winding 2022 include the pads 20221 and 20222. As shown in FIG. 3, the connection structures of the inner winding 2021 pass through the insulating layer along a direction perpendicular to the plane 20215 where the outer winding 2022 is located, and the output pads 20211 and 20212 of the inner winding 2021 connected to the external circuit are formed. A projection of the connection structures of the inner winding 2021 on the plane 20215 is located within the boundaries of the outer winding 2022. A length of the terminals of the inner winding 2021 is greatly reduced, thereby reducing loss on the terminal. In addition, a plurality of distributed output terminals of the inner winding 2021 can be formed on the surface of the transformer through a plurality of connection structure, such as vias, metal strips, or the like. The distributed output terminals effectively reduce the current flowing through each connection structure, and greatly improve the problem of uneven current distribution on each connection structure, so as to further improve the overall efficiency of the transformer.

However, when the output terminals of the inner winding are formed within the boundaries of the outer winding, the clearance between the outer winding and the output terminals of the inner winding is necessary, resulting in a decrease in an effective area of the outer winding where the current passes, and an increase in the loss of the outer winding. In particular, when the plurality of output terminals are formed within the boundaries of the outer winding, a plurality of clearance areas are inevitably formed on the outer winding, which affect the integrity of the outer winding. When the current flowing through the outer winding is relatively large, the loss of the outer winding will significantly increase. When the outer winding is a high-voltage winding, the possibility of insulation failure between the high-voltage winding and the low-voltage winding will also be greatly increased, thereby affecting the reliability of the transformer.

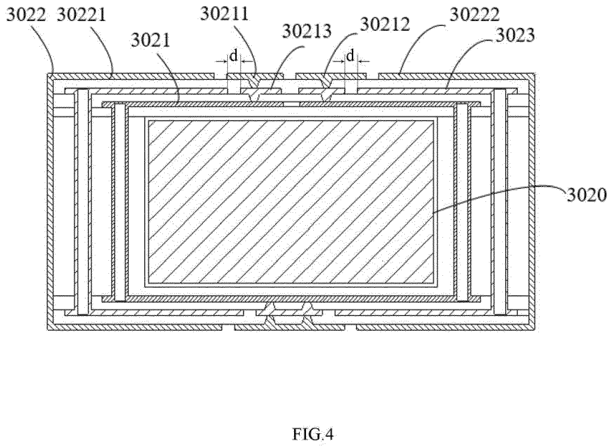

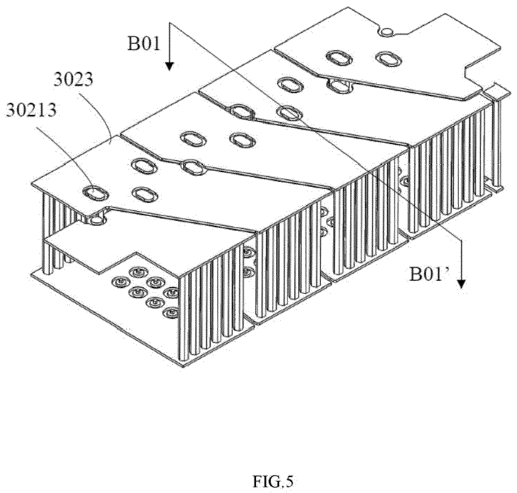

The transformer may have more windings, for example, more than three windings, as shown in FIGS. 4 and 5. FIG. 4 shows a transformer having an SPS winding structure, in which a primary winding 3023 is arranged between secondary windings 3021 and 3022. The transformer has a three-layer winding structure, and a primary winding 3023 and two secondary windings 3021 and 3022 locate in one layer respectively. The secondary winding 3021 is connected to pads 30211 and 30212 through connection structures, and the pads 30211 and 30212 are formed on a surface of a transformer and connected to an external circuit. As shown in FIG. 4, two steps are involved to form the pins of the secondary winding 3021. One step is that a part of the connection structure of the winding 3021 passes through an insulating layer between 3021 and 3023 to form a transfer pad 30213 on a wiring layer where the primary winding 3023 is located. And the other step is that the other part of the connection structure of the winding 3021 passes through an insulating layer between 3022 and 3023 to form the output pads 30211 and 30212 on a wiring layer where 3022 is located. As a whole, the connection structure passes through the insulating layer between windings 3021 and 3023 and the insulating layer between windings 3023 and 3022, and the pads 30211 and 30212 are formed on the wiring layer where the winding 3022 is located. Note that, the connection structure may also pass through the winding 3022 to form the pads 30211 and 30212 on the wiring layer outside the winding 3022. FIG. 4 is a cross-sectional view along a section line B01-B01' based on FIG. 5. It can be obviously seen that since the connection structure of the winding 3021 passes through the primary winding 3023 in an intermediate layer, the damage to the primary winding 3023 is relatively serious, which reduces the effective current flow area of the primary winding 3023 and increases the impedance.

In addition, in an application where an input is a high voltage and an output is a low voltage, the primary winding is usually a high-voltage winding with more turns, while the secondary winding is usually a low-voltage winding with fewer turns. In this case, when the connection structure of the inner secondary winding 3021 passes through the insulating layer between the primary winding 3023 and itself, a sufficient distance must be left between the two windings to satisfy the insulation requirements. Specifically referring to FIG. 5, a distance d from the edge of the transfer pad 30213 to the winding 3023 needs to satisfy the requirements for safety insulation. The inner winding is usually a low-voltage and high-current output winding. In order to reduce the loss on the output side, the inner winding is usually connected to the external circuit through a plurality of connection structures passing through the outer winding. The more connection structures, the less effective current flow area of the outer winding, and the more conduction loss of the outer winding. The more connection structures, the worse effect on the insulation between the inner winding and the outer winding. As an example, during the manufacturing process, an insulating medium layer needs to be laid between the windings 3022 and 3023, and then the insulating medium is pressed into a gap between the transfer pad 30213 and the winding 3023. The degree of compaction of the insulating medium between layers can be well guaranteed, but the filled gap is very likely to have some defects of insufficient filling. In order to pursue higher power density, the gap between the transfer pad 30213 and the winding 3023 will increasingly get close to the process limit, which is more prone to the problem of insufficient filling. This increases the risk of insulation between the high and low voltages of the primary and secondary windings, which means that the reliability of the transformer is reduced.

### SUMMARY

According to a first aspect of the present disclosure, there is provided a magnetic element, including:
a magnetic core, including at least one magnetic column extending along a first direction;
a first winding surrounding the magnetic column;
a second winding at least partially surrounding the first winding, wherein the number of turns of the second winding is less than or equal to the number of turns of the first winding; and
a third winding at least partially surrounding the second winding, wherein the number of turns of the third winding is less than or equal to the number of turns of the first winding.

Another aspect of the present disclosure further provides a power module, including:
the magnetic element as described above;
a first carrier board at least partially covering a first side surface of the magnetic element;
a first rectifier switch tube located on a side surface of the first carrier board away from the magnetic element; and
a second rectifier switch tube located on the side surface of the first carrier board away from the magnetic element.

In order to further understand features and technical content of the present disclosure, reference may be made to the following detailed description and accompanying drawings of the present disclosure. However, the detailed description and accompanying drawings here are only used to illustrate the present disclosure, rather than imposing any limitation on the scope of claims of the present disclosure.

### BRIEF DESCRIPTION OF THE DRAWINGS

Above and other features and advantages of the present disclosure will become more apparent from the detailed description of example embodiments thereof with reference to the accompanying drawings.
FIG. 1 is a schematic structural diagram of a conventional transformer module;
FIG. 2 is a perspective view of another conventional transformer;
FIG. 3 is a cross-sectional view in a direction of A01 -A01' in FIG. 2;
FIG. 4 is a cross-sectional view in a direction of B01 -B01' in FIG. 5;
FIG. 5 is a schematic structural diagram of still another conventional transformer;
FIG. 6(a) is a schematic diagram of a voltage conversion circuit according to a first embodiment of the present disclosure;
FIG. 6(b) is a schematic diagram of a voltage conversion circuit according to a second embodiment of the present disclosure;
FIG. 7 is a schematic structural diagram of a magnetic element according to a first embodiment of the present disclosure;
FIG. 8 is a plan view of a power module according to a first embodiment of the present disclosure;
FIG. 9(a) is a cross-sectional view in a direction of a1-a1' in FIG. 8;
FIG. 9(b) is a cross-sectional view in a direction of a2-a2' in FIG. 8;
FIG. 10 is a schematic structural diagram of another power module according to a first embodiment of the present disclosure;
FIG. 11 is a cross-sectional view in a direction of b-b' in FIG. 10;
FIG. 12 is a schematic structural diagram of a magnetic element provided by a second embodiment of the present disclosure;
FIG. 13 is a schematic structural diagram of a magnetic core according to a second embodiment of the present disclosure;
FIG. 14(a) to FIG. 14 (f) are schematic diagrams of a process of manufacturing a first metal layer according to a second embodiment of the present disclosure;
FIG. 15(a) to FIG. 15 (c) are schematic diagrams of a process of manufacturing a bendable substrate according to a second embodiment of the present disclosure;
FIG. 16 is a schematic structural diagram of a magnetic element according to a third embodiment of the present disclosure;
FIG. 17(a) to FIG. 17 (c) are schematic diagrams of a process of manufacturing a bendable substrate according to a third embodiment of the present disclosure;
FIG. 18 is a schematic structural diagram of a magnetic element with a reinforcing layer according to a third embodiment of the present disclosure;
FIG. 19(a) is a schematic structural diagram of a power module according to a fourth embodiment of the present disclosure;
FIG. 19(b) is a cross-sectional view along a direction of c-c' in FIG. 19(a);
FIG. 20 is a schematic diagram of an adapter board including an insulating layer according to a fourth embodiment of the present disclosure;
FIG. 21 is a perspective view of an adapter board after peeling off a dielectric insulating layer according to a fourth embodiment of the present disclosure;
FIG. 22(a) is a schematic diagram of a power module with a passive element according to a fourth embodiment of the present disclosure;
FIG. 22(b) is a cross-sectional view along a direction of d-d' in FIG. 22(a);
FIG. 23(a) is a schematic diagram of a power module using another adapter board according to a fourth embodiment of the present disclosure;
FIG. 23(b) is a cross-sectional view along a direction of e-e' in FIG. 23(a);

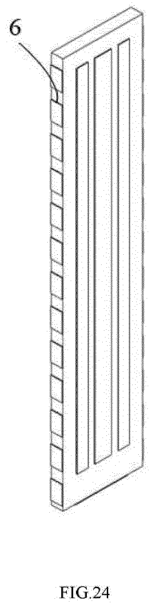

FIG. 24 is a schematic diagram of another adapter board including an insulating layer according to a fourth embodiment of the present disclosure;

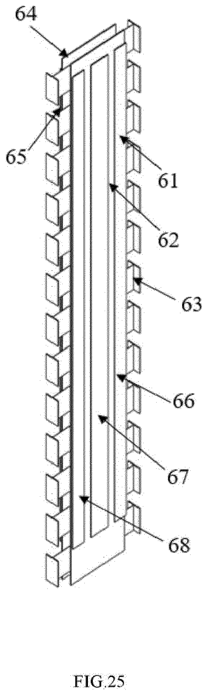

FIG. 25 is a perspective view of another adapter board after peeling off a dielectric insulating layer according to a fourth embodiment of the present disclosure;
FIG. 26 is a schematic structural diagram of a magnetic element according to a fifth embodiment of the present disclosure; and
FIG. 27 is a schematic structural diagram of a magnetic element according to a sixth embodiment of the present disclosure.

### DETAILED DESCRIPTION

Example embodiments will now be described more fully with reference to the accompanying drawings. However, the example embodiments can be implemented in a variety of forms and should not be construed as being limited to the embodiments set forth herein; rather, these embodiments are provided so that the present disclosure will be complete and full so as to convey the idea of the example embodiments to those skilled in this art. The same reference numerals in the drawings denote the same or similar components, and the repeated description thereof will be omitted.

In addition, the described features, components, or characteristics may be combined in any suitable manner in one or more embodiments. In the following description, numerous specific details are set forth to provide a thorough understanding of the embodiments of the present disclosure. However, those skilled in the art will appreciate that the technical solution of the present disclosure may be practiced without one or more of the specific details, or other components, parts, steps, methods and the like may be employed. In other instances, well-known components, parts or operations are not shown or described in detail to avoid obscuring various aspects of the present disclosure.

In addition, it can be understood that all embodiments of the present disclosure may be performed alone or in combination with other embodiments and are considered to be within the scope of the present disclosure.

Structures of a magnetic element and a power module and a manufacturing method of the present disclosure will be specifically introduced below with reference to various embodiments.

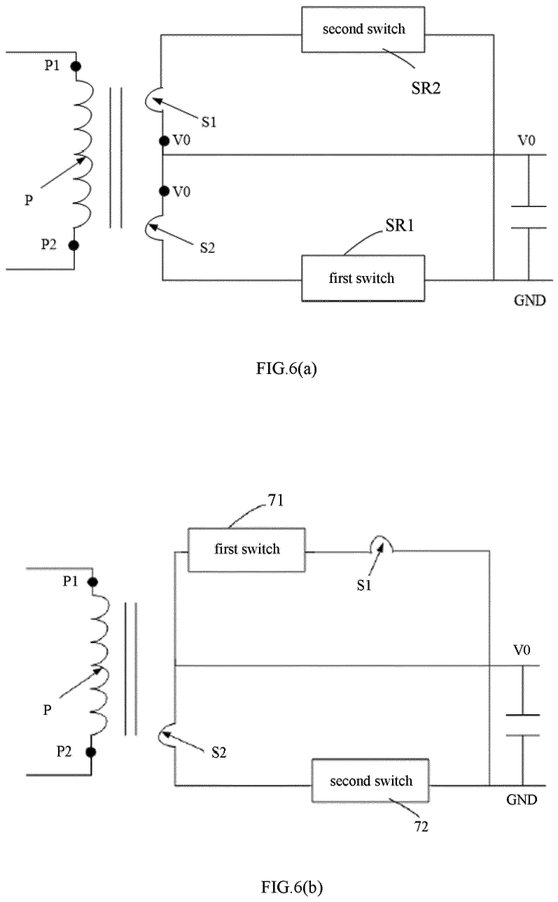

FIG. 6(a) shows a part of a voltage conversion circuit according to a first embodiment of the present disclosure. As shown in FIG. 6(a), a transformer includes a first winding composed of a primary winding P, and a second winding and a third winding composed of two secondary windings S1 and S2. The three windings are coupled to form the transformer. P1 and P2 are two terminals of the primary winding P. The windings S1 and S2 are connected in series to a node V0, the other node of the winding S1 is connected to an end of a second switch SR2, and the other node of the winding S2 is connected to an end of a first switch SR1. As shown in FIG. 6 (a), the windings S1 and S2, the first switch SR1, the second switch SR2 and a capacitor are connected to form a full-wave rectifier circuit. The primary and secondary windings can each have a single turn or a plurality of turns.

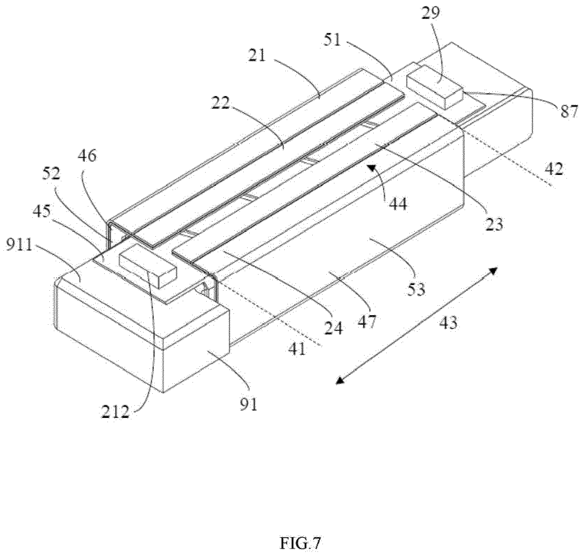

FIG. 7 is a partial perspective view of a magnetic element of the first embodiment. The magnetic element may be a part of a transformer or an inductor. The magnetic element includes a magnetic core, a first winding 45, a second winding 46 and a third winding 47. The perspective view shows a first magnetic column 91 of the magnetic core, and the first winding 45, the second winding 46 and the third winding 47, which are wound on the magnetic column. The second winding 46 and the third winding 47 are optionally foil windings. The first magnetic column 91 extends along a first direction 43, and the first winding 45 winds around the first magnetic column 91 along a second direction 44. The second winding 46 locates outside the first winding 45 and at least partially winds around the first winding 45 along the second direction 44, and the number of turns of the second winding 46 is less than or equal to the number of turns of the first winding 45. The third winding 47 locates outside the second winding and at least partially winds around the second winding 46 along the second direction 44, and the number of turns of the third winding 47 is less than or equal to the number of turns of the first winding 45. As shown in FIG. 7, a surface of the first magnetic column 91 is covered by a first metal layer 51, a second metal layer 52 and a third metal layer 53 disposed from the inside to the outside of the surface, and insulating layers are disposed between respective metal layers. The first winding 45 is formed in the first metal layer 51, and the second winding 46 and the third winding 47 are formed in the second metal layer 52 and the third metal layer 53, respectively. The direction 44 shows a winding direction of each winding around the magnetic column, and the direction 43 shows an extension direction of each winding parallel to the first magnetic column 91. 41 and 42 are boundaries formed by the outermost winding, such as the third winding 47, in its extension direction. Both ends of the first winding 45 extend beyond the boundaries 41, 42 of the second winding 46 or the third winding 47 along the extension direction 43. And a ninth power terminal 29 and a twelfth power terminal 212 are formed on two ends of the first winding 45, respectively. The ninth power terminal 29 and the twelfth power terminal 212 are respectively formed through two metal connection devices, such as conductive sheets 87. The third winding 47 winds around the first magnetic column 91 along the direction 44, and a first power pad 21 and a fourth power pad 24 are formed on its two ends, respectively. The first power pad 21 and the fourth power pad 24 are surface-mounted and used as the terminals of the third winding 47. Of course, the terminals of the third winding 47 may be formed by other structures, such as in-line pins, metal pieces, and the like. The second winding 46 is located inside the third winding 47 and also wound on the first magnetic column 91 along the direction 44. Connection structures pass through the insulating layer between the second winding 46 and the third winding 47, and a second power pad 22 and a third power pad 23 are formed on a surface of the magnetic element. The connection structures are correspondingly connected to the second power pad 22 and the third power pad 23, respectively. The second power pad 22 and the corresponding connection structures form a terminal of the second winding 46. The third power pad 23 and the corresponding connection structures form other terminal of the second winding 46. The second power pad 22 and the third power pad 23 are surface-mounted pads. Of course, the power pad may be replaced by other structures, such as in-line pins, metal pieces, and the like The connection structures may be vias, metal strips, and the like. The first power pad 21, the second power pad 21, the third power pad 23 and the fourth power pad 24 are all located between the boundaries 41 and 42. Here, an upper surface of the first magnetic column 91 in FIG. 7 is defined as a first side.

An area of a first projection of the third winding 47 is an area formed by a vertical projection of the third winding 47 on a plane where the upper surface 911 of the first magnetic column 91 is located, and this area includes two boundaries, which are the boundaries 41, 42 of the third winding 47 in its extension direction. Likewise, an area of a first projection of the second winding 46 also includes two boundaries. Two boundaries of the first projection of the second winding and two boundaries of the first projection of the third winding may or may not overlap. Since the boundaries of the second winding 46 and the third winding 47 in FIG. 7 overlap, the boundaries of the first projection of the second winding are also 41 and 42. In this case, the first terminals (such as the ninth power terminal 29 and the twelfth power terminal 212) of the first winding 45 are outside the area of the first projection of the third winding. That is, the first terminals of the first winding 45 are located outside the boundaries 41, 42 of the first projection of the third winding. The second terminals of the second winding 46 and the third terminals of the third winding 47 are located on a first side of the magnetic element (e.g., an upper surface of the magnetic element in FIG. 7), and the second terminals of the second winding 46 which include the second power pad 22 and the third power pad 23 are within the area of the first projection of the third winding. So do the third terminals of the third winding 47 (such as the first power pad 21 and the fourth power pad 24). That is, the second terminals of the second winding 46 and the third terminals of the third winding 47 are inside the boundaries 41 and 42 of the first projection of the third winding. Furthermore, the second winding 46 also forms the pad on the surface of the magnetic element by passing through the insulating layer between the second winding 46 and the third winding 47. In this embodiment, the terminals of the three windings lead out from at least two different directions: either extending out of the boundaries in the extension direction or stretching out within the boundaries.

Without considering the number of turns of each winding, the terminals of the inner winding extending out of the boundaries in the extending direction doesn't impact on the effective current flow area of the outer winding and the insulation between the inner and out windings. And the terminals of the winding stretching out within the boundaries reduce the length greatly and decreases the loss of the windings. In particular, one of the first terminals of the inner winding, such as the twelfth power terminal 212 of the first winding 45, extends out of the boundary of the outer winding (such as the second winding 46 or the third winding 47), and the other first terminal (such as the ninth power terminal) is led out within the boundary of the outer winding (such as the second winding 46 or the third winding 47). For example, the other first terminal is led out on the surface of the magnetic element by passing through the metal layer where the second winding 46 is located and the insulating layer between the second winding 46 and the third winding 47 in a direction perpendicular to the surface of the first magnetic column 91. In this way, the effect on the conductive area of the outer winding can also be reduced, thereby reducing the loss of the outer winding.

In a general conversion circuit with a low-voltage and high-current output, the first winding 45 is usually a multi-turn winding, and the second winding 46 and the third winding 47 have fewer turns, such as one turn. In addition, a current flowing through the first winding 45 is relatively small, and in order to provide a large current output, a current flowing through the second winding 46 and the third winding 47 is relatively large. In this embodiment, the first winding 45, the second winding 46 and the third winding 47 are sequentially disposed from the inside to the outside of the surface of the magnetic column. The number of turns of the first winding 45 is greater than the number of turns of the second winding 46 and the third winding 47, and the number of turns of the second winding 46 may be greater than or equal to the number of turns of the third winding 47. Compared with the prior art shown in FIGS. 2 and 3, in this embodiment a winding with more turns is in the innermost layer, and two windings with fewer turns are in a middle layer and an outer layer. Generally speaking, the current on the windings with fewer turns are larger than that on the windings with more turns, while the voltage on the windings with fewer turns are lower than that on the windings with more turns. And the connection structures of the windings with more turns are less than those of the windings with fewer turns. Under this structure, the inner winding has more turns, small current and less connection structures, and the less the connection structures of the inner winding, the more the effective current flow area of the outer winding, and the less the conduction loss of the outer winding. The less the connection structures of the inner winding, the smaller the impact on the insulation between the inner winding and the outer winding. In addition, in this embodiment, the innermost winding with more turns is connected to an external circuit through the terminals led out via the connection structure outside the projection area, which completely avoids the risk of insulation failure caused by the terminals led out within the boundary, and also avoids the reduction of the effective conductive area of the second winding 46 and the third winding 47. If the effective conductive area of the second winding 46 and the third winding 47 is reduced, the conduction loss on the second winding 46 and the third winding 47 will increase. Compared with the prior art shown in FIG. 1, the manner in which the terminals are led out in this embodiment effectively reduces lengths of the second terminals and the third terminals of the large-current windings, and greatly reduces the losses on the second terminals and the third terminals.

In combination with FIGS. 6(a) and 7, the primary winding P has primary terminals on the upper surface of the magnetic element, and the primary terminals include a ninth power terminal 29, a tenth power terminal 210, an eleventh power terminal 211 and a twelfth power terminal 212. The secondary winding S1 has secondary terminals on the upper surface of the magnetic element, and the secondary terminals include a second power pad 22, a third power pad 23, a sixth power pad 26, a seventh power pad 27 and corresponding connection structures passing through an insulating layer. The secondary winding S2 has a first power pad 21, a fourth power pad 24, a fifth power pad 25 and an eighth power pad 28 on the upper surface of the magnetic element. The primary winding P corresponds to the first winding 45, the secondary winding S1 corresponds to the second winding 46, and the secondary winding S2 corresponds to the third winding 47. In a practical structure, the voltage conversion circuit of FIG. 6(a) further includes a carrier where the switches located. The magnetic element, the carrier and the switches are stacked in a thickness direction.

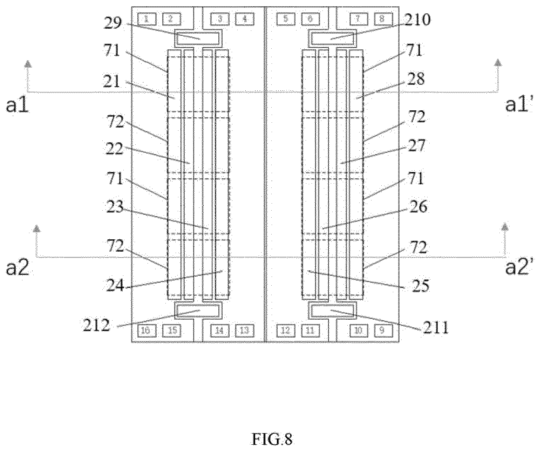

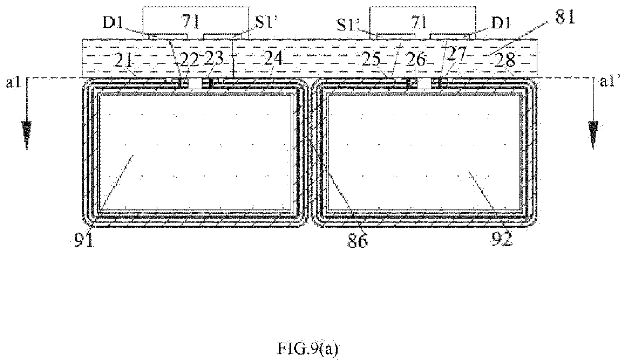

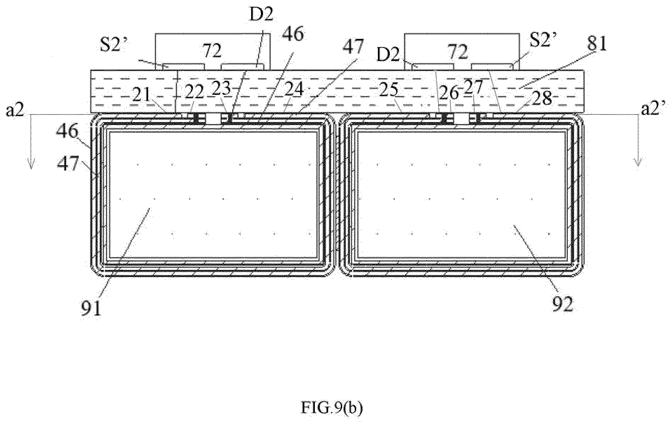

FIGS. 9(a) and 9(b) are cross-sectional views of a power module shown in FIG. 8 along a first cross section (a1-a1') and a second cross section (a2-a2'), respectively, and FIG. 8 is a top view of a power module corresponding to the voltage conversion circuit shown in FIG. 6(b) along a-a'. As shown in FIG. 6(b), the windings S1 and S2, the first switch 71, the second switch 72 and a capacitor are connected to form a full-wave rectifier circuit which is different from that of FIG. 6(a). As shown in FIGS. 8 and 9, the power module includes: the magnetic element shown in FIG. 7, a first carrier board 81 at least partially covering a surface of first side the magnetic element, the first switches 71 and the second switches 72. The first switches 71 are located on the surface of the first carrier board 81 away from the magnetic element, and electrically connected to the second winding 46 through the first carrier board 81. The second switches 72 are located on the surface of the first carrier board 81 away from the magnetic element, and electrically connected to the third winding 47 through the first carrier board 81. Specifically, two magnetic columns (a first magnetic column 91 and a second magnetic column 92) of the magnetic cores are each wounded with the first winding 45, the second winding 46 and the third winding 47. The first switches 71 and the second switches 72 are alternately placed on the first carrier board 81, and electrically connected to the second winding 46 and the third winding 47 respectively through the first carrier board 81.

In addition, with reference to FIGS. 7, 8, 9(a) and 9(b), the first to fourth power pads 21-24 extend from the boundary 41 to the boundary 42. The lengths of the pads become longer, the areas of the pads become larger correspondingly. The number of switches such as the first switches 71 and the second switches 72 connected to respective pads increases. For example, on a magnetic column in FIG. 8, the first to fourth power pads are respectively connected with two first switches 71 and two second switches 72, which makes the current distribution on respective pads more uniform and effectively reduces the losses of the terminals. In addition, the alternating arrangement of the first switches 71 and the second switches 72 in the extension direction further makes the current distribution even, thereby further reducing the terminal loss.

In addition, the first winding 45 can also be directly led out horizontally. That is to say, the first winding 45 directly leads out the terminals along the extension direction, and the conductive sheet 87 is not needed.

Referring to FIGS. 8, 9(a) and 9(b), the magnetic element further includes the second magnetic column 92, and the power module includes the magnetic element described in the foregoing embodiments, the first carrier board 81, and switches on the first carrier board. The magnetic element, the first carrier 81 and the switches are stacked in a thickness direction. The secondary winding around the first magnetic column and the secondary winding around the second magnetic column are connected through the adhesive 86. The electrical connection between the secondary winding of the magnetic element and the secondary side switches can be realized through a metal wiring layer of the first carrier board 81. The three windings around the first or second magnetic column may be integrated on a bendable substrate, e.g. a flexible PCB. Assuming the first magnetic column unit includes the first magnetic column 91 and a first bendable substrate around it, and the second magnetic column unit includes the second magnetic column 92 and a second bendable substrate around it. Thus the assembly of the first or second magnetic column unit with the corresponding bendable substrates can be performed independently, and there is no need to take into account the electrical connection, thus the manufacturing process will be relatively simple.

In combination with FIGS. 6(b) and 8, the primary winding P has primary terminals on the upper surface of the magnetic element, and the primary terminals include a ninth power terminal 29, a tenth power terminal 210, an eleventh power terminal 211 and a twelfth power terminal 212. The secondary winding S1 has secondary terminals on the upper surface of the magnetic element, and the secondary terminals include a second power pad 22, a fourth power pad 24, a fifth power pad 25, a seventh power pad 27 and corresponding connection structures passing through an insulating layer. The secondary winding S2 has a first power pad 21, a third power pad 23, a sixth power pad 26 and an eighth power pad 28 on the upper surface of the magnetic element. The primary winding P corresponds to the first winding 45, the secondary winding S1 corresponds to one part of the second winding 46 and one part of the third winding 47, and the secondary winding S2 corresponds to the other part of the second winding 46 and the other part of the third winding 47. The surface of the first side of the magnetic element is further provided with a plurality of signal pads, and projections of the signal pads on the surface of the first side of the magnetic element do not overlap a first projection of the first terminals, a first projection of the second winding or a first projection of the third winding. The first projection of the first terminals is the area formed by a vertical projection of the first terminals on a plane where the upper surface 911 of the first magnetic column 91 is located. As shown in FIG. 8, the upper surface of the magnetic element also includes pads 1 to 16, which can be used for carrying signals, driving, control, and power.

In another alternative embodiment, the second terminals and the third terminals are respectively disposed on a second side of the magnetic element. Here, the second side of the magnetic element is a different side from the first side. For example, from the perspective of FIG. 7, the first side of the magnetic element is the upper surface, and the second side of the magnetic element is another side except the upper surface, such as a lower surface of the first magnetic column. And a second projection of the second terminals and a second projection of the third terminals are on the surface of the second side of the magnetic element, respectively, and a second projection of the second winding and a second projection of the third winding are on the surface of the second side of the magnetic element, respectively. The second projection of the second terminals is located within the second projection of the second winding, the second projection of the second winding has two boundaries arranged along the extension direction, and the second projection of the second terminals extends from a boundary to another boundary of the second projection of the second winding. The second projection of the third terminals is located within the second projection of the third winding, the second projection of the third winding has two boundaries arranged along the extension direction, and the second projection of the third terminals extends from a boundary to another boundary of the second projection of the third winding.

The magnetic element may also include a connection structure (such as the conductive sheet 87 shown in FIG. 7), and the connection structure is surface-mounted to the first winding 45, so that an upper surface of the connection structure, an upper surface of the second terminals and an upper surface of the third terminals are coplanar. Specifically, since the first winding 45 is formed at the first metal layer, and the second winding 46 and the third winding 47 are formed at the second and third metal layers and at least partially cover the first metal layer, there must be height differences between respective windings in a thickness direction. In order to solve the coplanarity problem of the first terminals of the first winding 45 with the second terminals of the second winding 46 and the third terminals of the third winding 47, the conductive sheets 87 can be surface-mounted to the first winding 45 to form the terminals of the first winding, so as to compensate for the height difference by means of a height of the conductive piece, and make all terminals on the upper surface of the magnetic element coplanar, as shown in FIG. 7. The improved terminals' coplanarity can effectively improve the soldering yield.

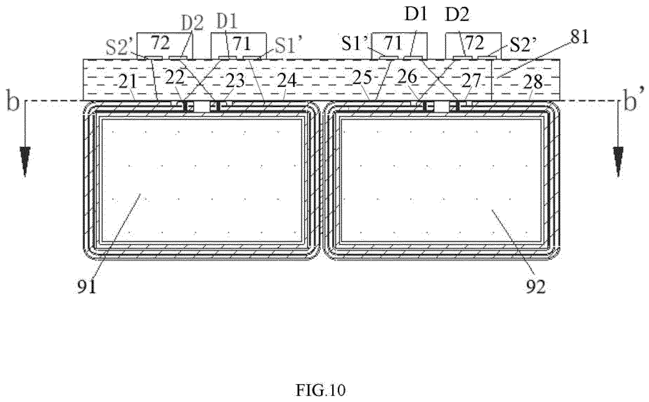

With continued reference to FIGS. 8, 9(a) and 9(b), the second power pad 22 of the magnetic element is connected to a lower surface of the first carrier board 81 and is connected to a terminal D1 of the first switch 71 through the metal wiring layer of the first carrier board 81. The fourth power pad 24 is connected to the lower surface of the first carrier board 81, and is connected to a terminal S1' of the first switch 71 through the metal wiring layer of the first carrier board 81. The third power pad 23 is connected to the lower surface of the first carrier board 81, and is connected to a terminal D2 of the second switch 72 through the metal wiring layer of the first carrier board 81. The first power pad 21 is connected to the lower surface of the first carrier board 81, and is connected to a terminal S2' of the second switch 72 through the metal wiring layer of the first carrier board 81. With reference to FIGS. 9(a), 9(b) and 10, metal wiring layers for connecting D1 and D2 are crossed within the first carrier board 81. The first carrier board 81 can be realized by a mature PCB process during which the routing is flexible. Similarly, the pads located above the second magnetic column 92 are connected to the first switch 71 and the second switch 72 through the metal wiring layers of the first carrier board 81. For a specific connection manner, reference may be made to the first magnetic column 91, which will not be repeated here. Disposing traces in the first carrier board 81 in a crossed manner can greatly reduce requirements for the magnetic element, thereby reducing the difficulty of manufacturing the magnetic element.

With continued reference to FIG. 9(b), since the secondary winding S1 and the secondary winding S2 are arranged in the crossed manner, the secondary winding S1 is partially outside the secondary winding S2. With continued reference to FIG. 8, the first switches 71 and the second switches 72 on the upper surface of the first carrier board 81 are arranged almost in a line in an alternating manner along long sides of the first magnetic column 91 and the second magnetic column 92. The alternating arrangement can make the current flowing through the first switches 71 and the second switches 72 more uniform, there will be no large current accumulation, and the loss will be smaller.

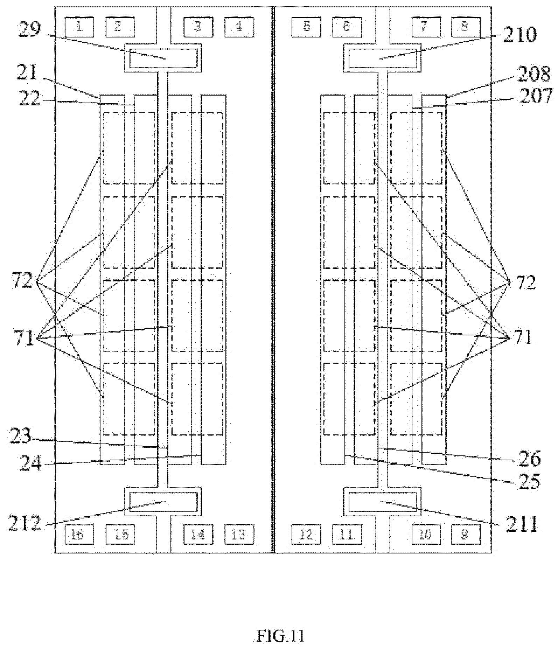

In order to further achieve a more uniform current distribution, as shown in FIGS. 10 and 11, another stack structure of the power module is provided. FIG. 10 is another stack structure of a power module, and FIG. 11 is a top view along a direction of b-b' in FIG. 10. Referring to FIGS. 10 and 11, a difference from FIGS. 8, 9(a) and 9(b) is that the first switches 71 and the second switches 72 are disposed on the upper surface of the first magnetic column 91, and the first switches 71 and the second switches 72 belong to two rows. Similarly, the first switches 71 and the second switches 72 are disposed above the second magnetic column 92, and the firs switches 71 and the second switches 72 belong to two rows. Comparing to a distribution feature of the first switch 71 and the second switches 72 shown in FIGS. 8, 9(a) and 9(b), the arrangement manner shown in FIGS. 10 and 11 makes the current approximately evenly distributed to four first switches 71 located in the same row along the winding of the magnetic element and through the metal wiring layer of the first carrier board 81. Similarly, the current is approximately evenly distributed to four second switches 72 located in the same row through the metal wiring layer of the first carrier board 81. There is very little lateral current. Thus, the arrangement of the first switches 71 and the second switches 72 shown in FIGS. 10 and 11 can achieve a better uniform current effect, and also further reduce the loss.

For the structure of the magnetic element of the first embodiment, the first winding, the second winding and the third winding can be manufactured in various manners. They can be manufactured by a PCB board process, by a laser direct writing process on a surface of the magnetic core, by copper foil direct winding process, or even by a mixed one of above processes. In addition, a part of the secondary winding S1 is located on a second metal layer of the bendable substrate, and the other part is located on a third metal layer of the bendable substrate, such as FIGS. 8, 9(a) and 9(b). Likewise, the secondary winding S2 also has the same distribution feature, which will not be repeated here. Thus the winding S1 is partially outside the winding S2, and the winding S2 is partially outside the winding S1. Alternatively, the secondary winding S1 is located only on the second metal layer, and the secondary winding S2 is located only on the third metal layer, such as FIG. 6(a). Thus the winding S2 as a whole is located outside the winding S1. Optionally, the secondary windings S1 and S2 can not only be integrated in a bendable substrate, but also be formed by the copper-foil. The present disclosure further provides a method for manufacturing a magnetic element. The method includes the following steps: providing a magnetic core with at least one magnetic column; forming a first metal wiring layer on a surface of the magnetic column to obtain a magnetic core assembly, and forming the first winding on the first metal wiring layer; providing a bendable substrate with a second metal wiring layer and a third metal wiring layer, and forming the second winding on the second metal wiring layer and the third winding on the third metal wiring layer; combining the bendable substrate with the magnetic core assembly so that the second winding at least partially surrounds the outer side of the first winding, and the third winding at least partially surrounds the outer side of the second winding. In another embodiment, the second winding and the third winding are integrally formed. The number of turns of the second winding and the number of turns of the third winding are both smaller than that of the first winding

An implementation process of the manufacturing method for the magnetic element will be specifically described below with reference to a second embodiment, and this method can be used to manufacture the magnetic element of the above-mentioned first embodiment shown in FIGS. 7 to 11.

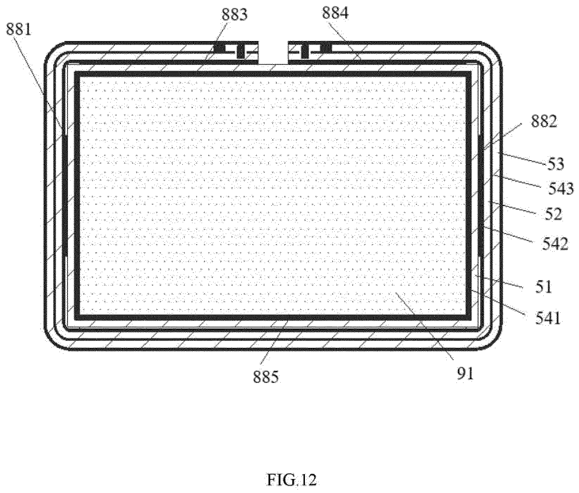

A magnetic element is shown in FIG. 12, and the magnetic element includes a magnetic core assembly and a bendable substrate.

The magnetic core assembly includes a first magnetic column 91, a first metal layer 51 is pre-disposed on a surface of the first magnetic column 91, and a first insulating layer 541 is disposed between the first metal layer 51 and the first magnetic column 91.

The bendable substrate includes a second metal layer 52 and a third metal layer 53, and a third insulating layer 543 is disposed between the second metal layer 52 and the third metal layer 53.

The magnetic core assembly and the bendable substrate are assembled to form the magnetic element through an adhesive layer, and a second insulating layer 542 is disposed between the magnetic core assembly and the bendable substrate.

For the structures shown in FIGS. 7, 8, 9(a) and 9(b), a manufacturing process for the first metal layer 51 will be introduced firstly.

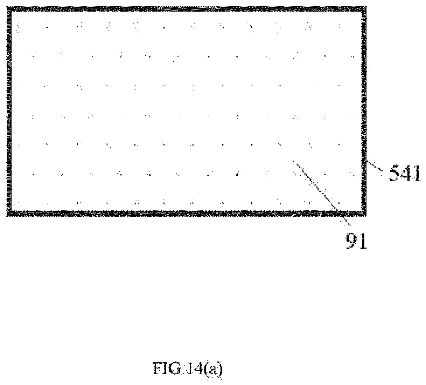

Step 1: the first insulating layer 541 is formed on the surface of the first magnetic column 91, as shown in FIG. 14(a).

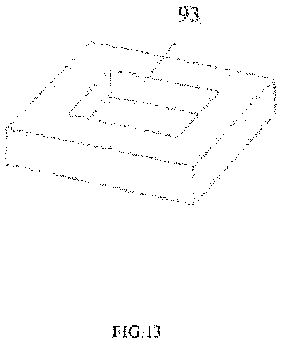

In this embodiment, the magnetic core 93 may be a circular ring composed of one segment of magnetic column, or may be a triangular ring composed of a plurality of segments of magnetic columns, or may have a " 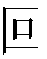 " shape, a " 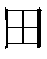 " shape, or other shapes composed of the plurality of segments of magnetic columns. A specific structure of the magnetic core is not limited. As shown in FIG. 13, the magnetic core is an annular body composed of at least one segment of magnetic column connected end to end, such as a " 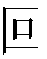 " shaped structure formed by connecting end to end. And the magnetic core includes a " 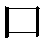 " shaped window. The magnetic core 93 may be integrally formed by a plurality of magnetic columns, or may be formed by splicing a plurality of magnetic columns that are separately manufactured. During the manufacturing of the magnetic core, a window can be first disposed on the magnetic core 93. The window can be directly shaped by a mold when the magnetic core is shaped, or can be formed by processing the magnetic substrate. The first manner has a feature of easy processing, while the second manner has an advantage of high dimensional accuracy, but the present disclosure is not limited to this.

This process flow only takes one segment of magnetic column as an example, which can be defined as the first magnetic column 91. The first insulating layer 541 is formed on the surface of the first magnetic column 91, for example, by spraying, dipping, electrophoresis, electrostatic spraying, chemical vapor deposition, physical vapor deposition, sputtering, evaporation deposition, or printing process. The first insulating layer 541 typically has an insulating function. For example, when a magnetic material has a low surface insulation resistance, such as a MnZn ferrite, a transition layer can be added to reduce the inter-turn leakage. For a transformer that needs isolation, primary and secondary sides have higher withstand voltage requirements, and the transition layer can be disposed on the surface of the magnetic core to satisfy requirements for the safety withstand voltage. In addition, a material of the transition layer usually includes epoxy resin, silicone, acetal material, polyester material, polyesterimide material, polyimide material or parylene, and so on. The first insulating layer 541 typically has an adhesive force enhancement function. For example, when an adhesive force between the magnetic material surface and the subsequent metal wiring layer is not good, an adhesive force enhancement coating, such as epoxy resin, is needed to improve the adhesion between metal wiring layer and itself, or make it easy to be adhered through surface treatment (such as roughening, surface modification, etc.). The first insulating layer 541 typically has a stress release function. For example, when the magnetic material is a stress-sensitive material, such as a ferrite type material, in order to avoid or reduce the stress on the magnetic material caused by the subsequent process to cause the deterioration of the magnetic property, such as the increased loss or the decreased magnetic conductivity, a stress release material, such as silicone, can be provided. The first insulating layer 541 typically has a magnetic core protection function to prevent a material directly adjacent to the magnetic core from affecting the property of the magnetic material. The first insulating layer 541 typically has a surface flattening function. For example, improve surface flatness of the magnetic core, so as to facilitate the smooth progress of the subsequent process and so on.

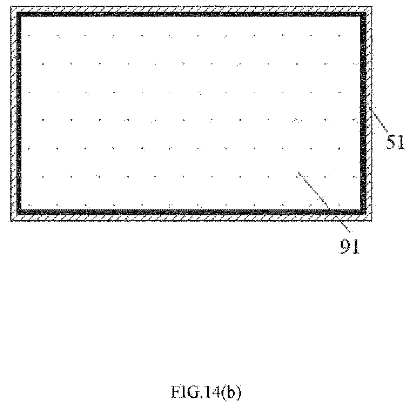

Step 2: the first metal layer 51 is formed on a surface of the first insulating layer 541, as shown in FIG. 14(b).

The first metal layer 51 composed of copper or copper alloy is formed on the surface of the first insulating layer 541 by a metallization process, and the metallization process includes electroplating and electroless plating. If the current of the first metal layer is low, the thickness of the first metal layer 51 is relatively thin (such as 10-20um). And the first metal layer 51 can be formed by electroless plating. If the current of the first metal layer is relatively high, it can be formed by means of electroplating. Prior to the electroplating, a seed layer can be disposed through methods such as the electroless plating, sputtering or evaporation to improve surface conduction and increase the adhesive strength. In practical applications, the first metal layer 51 may be formed on a surface of at least one segment of the magnetic column of the magnetic core by electroplating or electroless plating technologies. It should be noted that, the first metal layer 51 may also be formed only on one surface or a partial side surface of one segment of the magnetic column, and the present disclosure is not limited thereto.

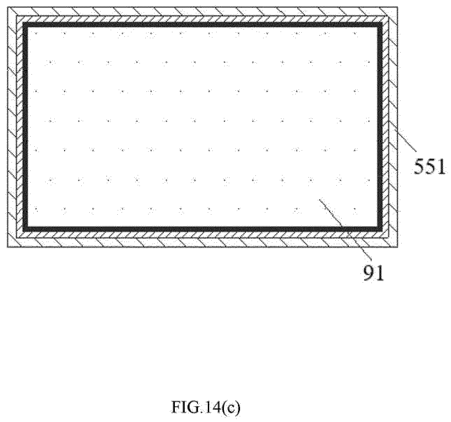

Step 3: a first metal protective layer 551 is formed on at least part of the first metal layer 51, as shown in FIG. 14(c).

In a possible implementation, the first metal protective layer 551 composed any one of tin, tin alloy, gold or gold alloy may be formed on the first metal layer 51 through the electroplating or electroless plating technologies. It is low cost, and the reaction rate is extremely slow in a strong oxidizing solvent so that the protection effect is excellent when using tin as the protective layer. Moreover, in the embodiment, the first metal protective layer 551 may be provided through the electroplating or electroless plating process. The non-metallic material such as a conventional photoresist material is not adopted because a pattern of the photoresist material is defined by exposure and development processes, but the current exposure can usually only be carried out on the same plane, and for the structure in this embodiment, there is a need to perform the pattern definition on a sidewall of the window to form the winding around the magnetic column. Therefore, the exposure and development processes are not applicable. Furthermore, the first metal protective layer 551 has the following advantages compared with a conventional organic material. First, it is difficult to evenly coat the photoresist material such as the organic material, especially in corners or the like, resulting in poor consistency of layer thickness and poor consistency of the process. While it has much better conformal coating ability when using the metal coating as the metal protective layer. Second, if the organic material is used as the protective layer, there will be some voids below the organic material after the etching of the metal layer such as a copper layer is completed because the metal of the first metal layer 51 is generally etched using a wet etching process. After the etching of the metal layer such as a copper layer is completed, there will be some voids below the organic material, since the wet etching process has a certain isotropy. And when the organic material is retained for a subsequent manufacturing process such as spraying the insulating layer, there will be a certain shadow and shadowing effect at positions of the voids below the organic layer, resulting in a problem of poor process, such as bubbles and the like. Moreover it is also difficult to remove the entire organic material, and some problems may be caused, such as organic solvent pollution, long process time and surface cleaning. In summary, in the embodiment, the first metal protective layer 551 may be provided using the electroplating or electroless plating process.

In addition, in a possible implementation, the thickness of the first metal protective layer 551 may be adjusted according to protection capabilities of metals. For example, if the first metal protective layer 551 is made of tin or tin alloy, the first metal protective layer 551 may have a thickness ranging from 1 to 20 um; or, if the first metal protective layer 551 is made of gold or gold alloy, the first metal protective layer 551 may have a thickness ranging from 0.1 to 2 um.

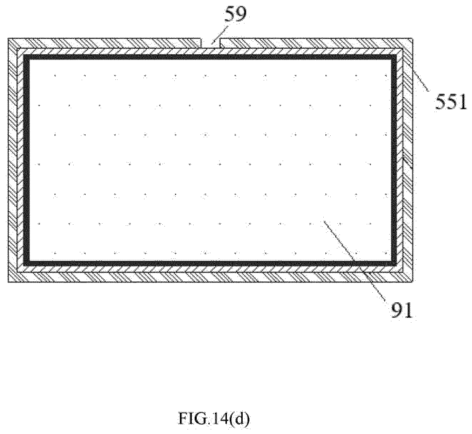

Step 4: part of the first metal protective layer 551 is removed through a direct writing technique to expose the first metal layer 51 that needs to be etched, as shown in FIG. 14(d).

In this embodiment, FIG. 14(d) is a cross-sectional view of the first metal protective layer 551 with a part thereof removed by the direct writing technique. A surface of the first metal protective layer 551 is patterned through the direct writing technique to expose the part of the first metal layer 51. That is, the metal of the wiring layer that needs to be etched is exposed.

In a possible implementation, the direct writing technique may be, for example, a laser direct writing technique. In contrast to the conventional photolithographic process under mask protection, the direct writing technique is characterized in direct patterning with a focused beam, a focused electron beam, a focused ion beam or the like. It is flexible to produce series of products according to different requirements since the direct writing technique requires no mask, so that it is possible to greatly shorten the time in getting the products into market. In addition, the places and surface states of the samples can be accurately positioned through an optical recognition technique prior to the direct writing, thus a direct writing path for each sample may be optimized so as to increase the yield and reduce requirements on a manufacturing process that precedes the direct writing, thereby enhancing competitiveness of the products. Moreover, since the first metal protective layer 551 is provided on the first metal layer 51, the first metal layer 51 may play a good role of thermal isolation during the direct writing, avoiding an impact on the magnetic material.

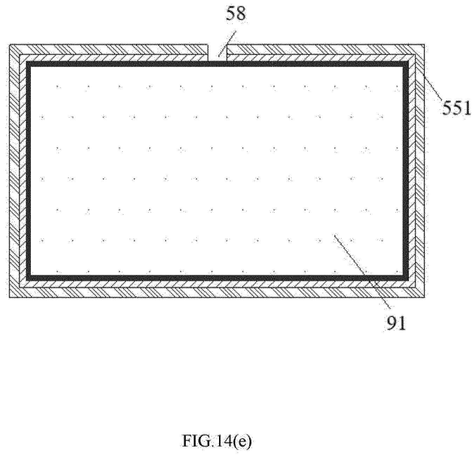

Step 5: the exposed first metal layer 51 is etched to form a structure desirable for the first metal layer 51, as shown in FIG. 14(e).

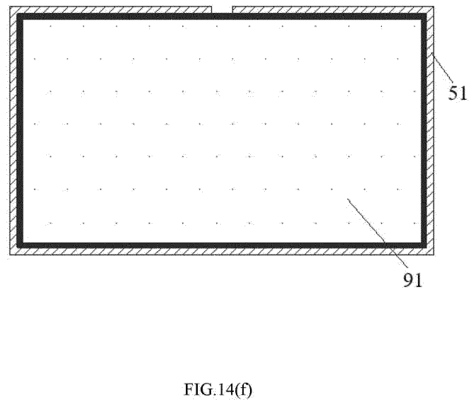

Step 6: the remaining first metal protective layer 551 is removed, as shown in FIG. 14(f).

Specifically, whether to remove the first metal protective layer 551 may depend on the material of the first metal protective layer 551. For example, when tin is used as the protective layer, after a pattern is etched on the metal layer, removing the protective layer using an etching solution may be selected as appropriate. In addition, if the protective layer is made of gold, it may be retained. Since the protective layer of gold has an extremely thin thickness, an edge portion may also be removed by a water jet cutting process, a sand blasting process or an ultrasonic process.

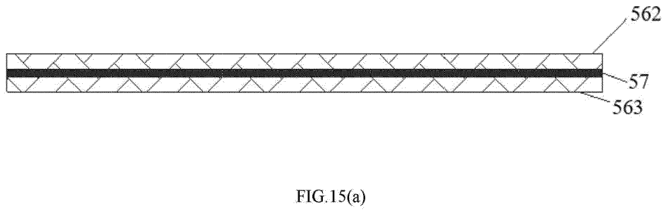

Next, a manufacturing process for the bendable substrate is introduced, as shown in FIGS.15(a) to (c).

In step 1, part of the second metal wiring layer 562 and the third metal wiring layer 563 is pre-formed, as shown in FIG. 15(a). An adhesive base substrate 571 is selected, and the structure of the base substrate 571 is composed of copper foil, adhesive, and polyimide (PI). That is, the adhesive is attached to both sides of the PI, and then the copper foil is pressed on both sides to form the double-sided adhesive base substrate 571. According to the current requirements, a thickness of the pressed copper foil can be freely selected.

In addition, the base substrate 571 can be also a non-adhesive base substrate 571. Compared with the ordinary adhesive base substrate 571, the non-adhesive base substrate 571is only composed of copper foil and PI with the middle bonding layer omitted, which has the advantages of thinner, better dimensional stability, higher heat resistance, higher bending resistance, better chemical resistance and so on.

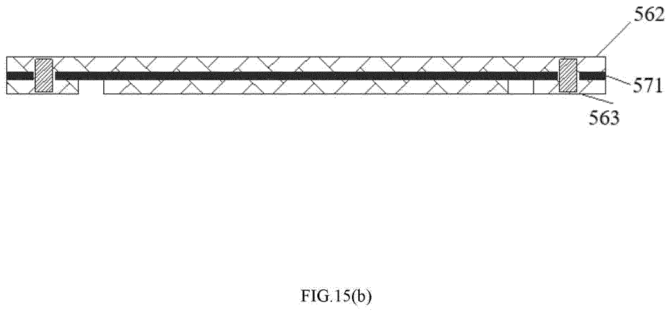

In step 2, vias connected the second metal wiring layer 562 and the third metal wiring layer 563 are formed, as shown in FIG. 15(b).

On the basis of FIG. 15(a), through a drilling process and the metallization process, the second metal wiring layer 562 and the third metal wiring layer 563 are connected through vias, and the etching process is subsequently performed on the third metal wiring layer 563 to form the structure shown in FIG. 15(b).

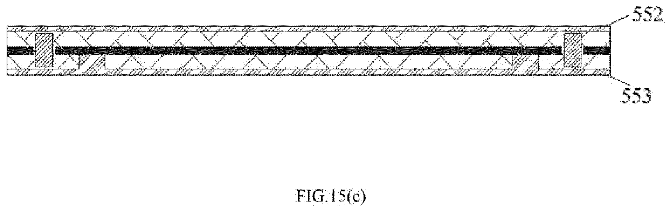

In step 3, a second metal protective layer and a third metal protective layer are formed, as shown in FIG. 15(c).

Specifically, the second metal protective layer and the third metal protective layer can be formed by means of pressing, and a material for pressing can be flexible ink or epoxy resin, which is not limited here.

After the magnetic core assembly and the bendable substrate are fabricated, the magnetic element is formed by post-assembling the bendable substrate and the magnetic core assembly, as shown in the schematic cross-sectional view in FIG. 12. Two free ends of the bendable substrate, that is, a first end and a second end, are both located above the magnetic core assembly, and the bendable substrate and the magnetic core assembly are bonded together by adhesive layers 1-5 to form the magnetic element. And the adhesive layers 1-5 are denoted as 881-885 in the figure. A material of the adhesive layer can be a thermosetting material, such as silicone resin, epoxy resin, and the like. In this case, the second metal wiring layer 562 of the bendable substrate forms the second metal layer 52 of the magnetic element, and the third metal wiring layer 563 of the bendable substrate forms the third metal layer 53 of the magnetic element. The second metal protective layer of the bendable substrate forms the second insulating layer 542 of the magnetic element, and the base substrate 571 of the bendable substrate forms the third insulating layer 543 of the magnetic element.

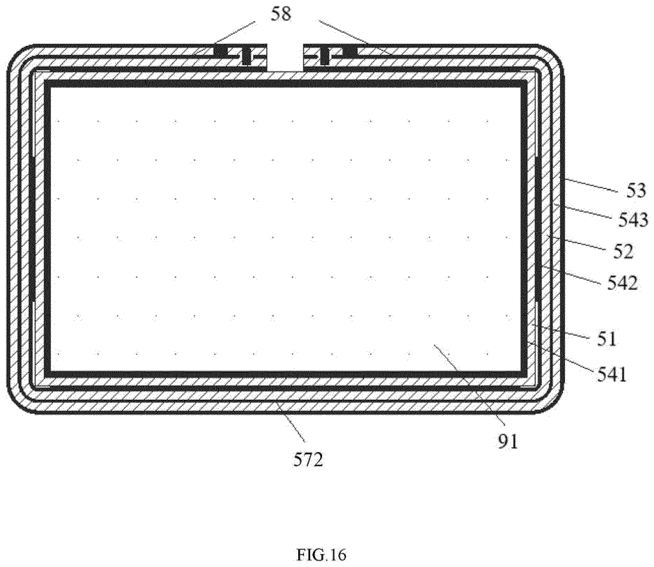

FIGS. 16 to 18 are schematic diagrams of a magnetic element and a manufacturing method according to a third embodiment of the present disclosure. In this embodiment, on the basis of the second embodiment, the third insulating layer is partially reinforced, and a local reinforcing part 572 is performed on the upper and lower surfaces of the magnetic element. Since pads are formed on the upper and lower surfaces of the magnetic element for connecting an external structure, it is necessary to ensure good enough flatness. In this embodiment, on the basis of ensuring that the bendable substrate can be bent, locally tempering the third insulating layer can effectively improve the rigidity of the bendable substrate on the upper and lower surfaces of the magnetic element, thereby ensuring good flatness.

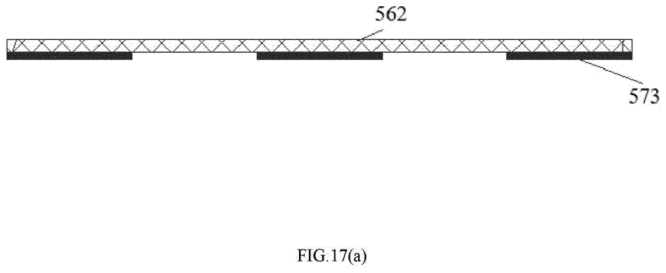

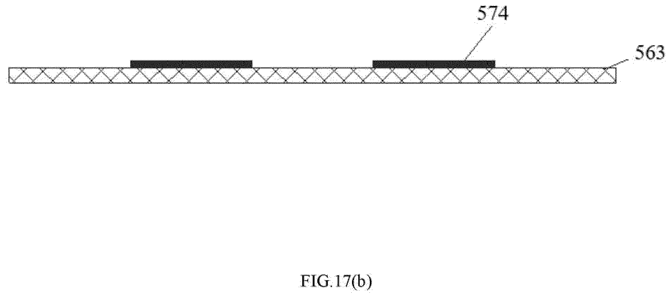

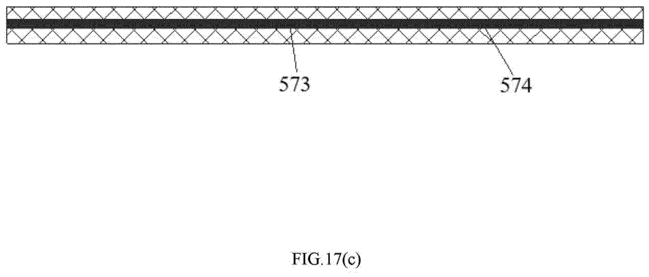

A process flow of the bendable substrate is shown in FIGS.17(a) to (c).

Specifically, a single-sided copper clad laminate is selected, the base substrate of the copper clad laminate is a rigid base substrate 573, and a partial area of the rigid base substrate 573 is removed by a removal process, which can also be removed by a physical or chemical method, such as a laser engraving process, which is not limited here.

Another single-sided copper clad laminate is selected, the base substrate of the copper clad laminate is a flexible base substrate 574, and a partial area of the flexible base substrate 574 is also removed by the removal process.

The two single-sided copper clad laminates are pressed together to form a substrate covered with the double-sided copper foil, the substrate includes the second metal wiring layer 562 and the third metal wiring layer 563, and base substrates between the second metal wiring layer 562 and the third metal wiring layers 563 include the rigid base substrate 573 and the flexible base substrate 574.

Subsequently, post-assembly with the first magnetic column 91 is performed through a bending process to form the magnetic element as shown in FIG. 16. In this case, the second metal wiring layer 562 forms the second metal layer 52 of the magnetic element, the third metal wiring layer 563 forms the third metal layer 53 of the magnetic element, and the third insulating layer 543 located between the second metal layer 52 and the third metal layer 53 includes a rigid area and a flexible area.

Compared with the second embodiment, it can be clearly seen in combination with the process flow of this embodiment that the thickness of the magnetic element described in this embodiment is the same as that of the second embodiment, which is not increased due to the local toughing of the third insulating layer.

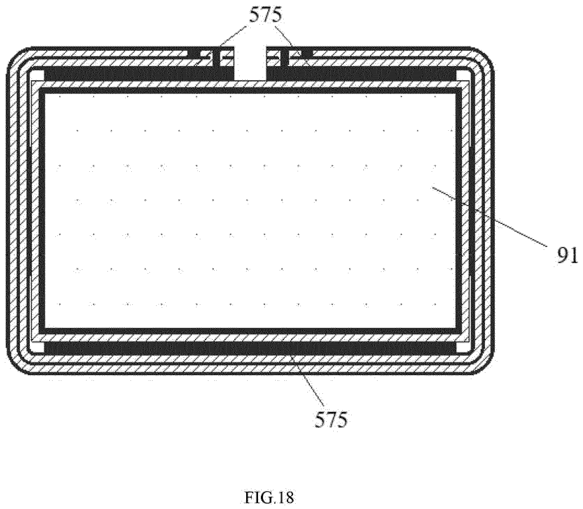

In addition, based on the first embodiment, a reinforcing layer 575 is provided on a surface of the bendable substrate, as shown in FIG. 18. After the bendable substrate is formed, the reinforcing layer 575 can be disposed on the surface of the bendable substrate, and a material of the reinforcing layer can be exactly the same as that of the third insulating layer, such as a PI material, but the reinforcing layer 575 is thicker than the third insulating layer 543. The reinforcing layer 575 can also be made of a glass fiber reinforced prepreg (PP) material or a metal material, which is not limited here.

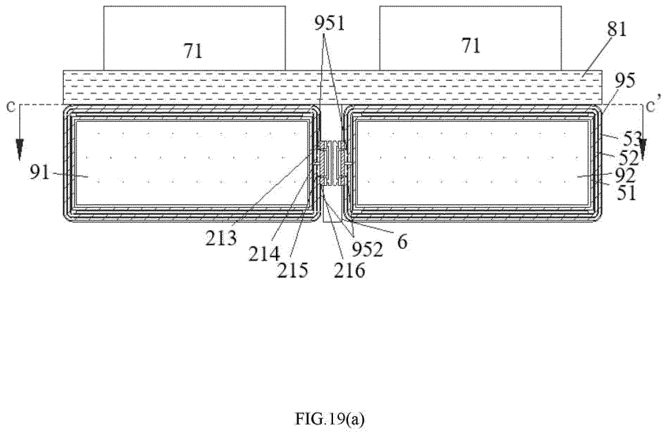

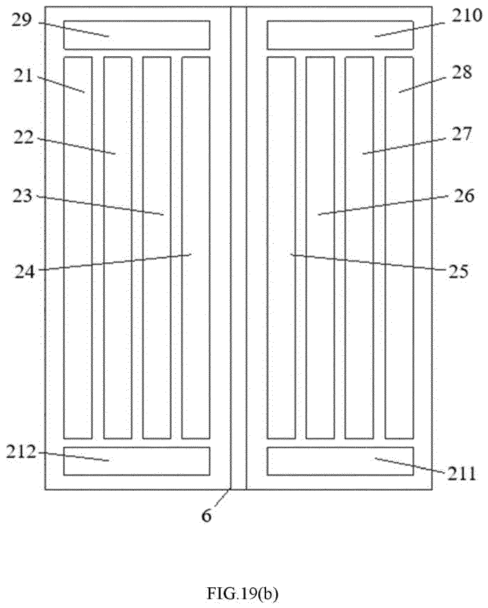

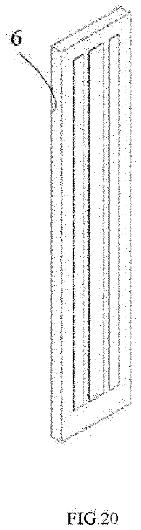

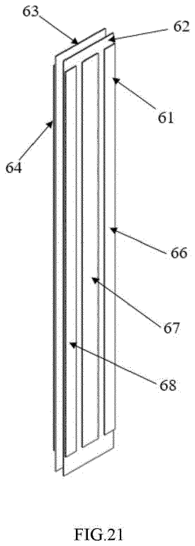

FIGS.19(a) and 19(b) are schematic structural diagrams of another power module according to a fourth embodiment, FIG. 19(a) is a cross-sectional view of a power module along a thickness direction, and FIG. 19(b) is a top view along c-c'. FIGS. 20 and 21 are schematic structural diagrams of an adapter board included in the power module, FIG. 20 is a perspective view including a dielectric insulating layer, and FIG. 21 is a perspective view after peeling off a dielectric insulating layer.

With reference to the first three embodiments, it can be clearly seen that both the first end and the second end of the bendable substrate are located on the upper surface of the magnetic element. From the perspective of assembly accuracy, since the first end and the second end are not constrained to each other, there is inevitably a relative positional tolerance between pads located at the first end and the second end during the assembly process, and the dimensional accuracy of the pad of the formed magnetic element is relatively poor. Therefore, in order to further optimize the dimensional accuracy of the pads, in this embodiment, the first end 951 and the second end 952 are disposed on the sides of the first magnetic column 91 (the second magnetic column 92). In this way, all the pads on the upper surface of the magnetic element are located at the same end of the bendable substrate 95, so that the relative positional tolerance between the pads is reduced, and the dimensional accuracy of the pads is improved. Here, the side where the first end 951 and the second end 952 are located is defined as a third side of the magnetic element. Under the same plane size, the dimensional accuracy of the pads is improved, a size of the pad can be made larger, and the spacing between the pads can be also made smaller, thereby increasing an area for the current flowing through the magnetic element to the first carrier board, reducing the power loss and improving the power supply efficiency of the module. In this embodiment, the second winding 46 is connected to the second terminals (including a second power pad 22 and a third power pad 23 in FIG. 19b), and the third winding 47 is connected to the third terminals (a first power pad 21 and a fourth power pad 24 in FIG. 19b). The second power pad and the third power pad are electrically connected with a first transition pad and a second transition pad, respectively, and the first transition pad and the second transition pad are located on the third side of the magnetic element. In this embodiment, the second terminals include the second power pad 22 and the third power pad 23 shown in FIG. 19(b), and the third terminals include the first power pad 21 and the fourth power pad 24 shown in FIG. 19(b). The first transition pad includes a fourteenth power pad 214 and a fifteenth power pad 215 shown in FIG. 19(a), and the second transition pad includes a thirteenth power pad 213 and a sixteenth power pad 216 shown in FIG. 19(a).

Referring to the cross-sectional view shown in FIG. 19(a), since the first ends 951 and the second ends 952 of the bendable substrate 95 are disposed on the side of the first magnetic column 91 or the second magnetic column 92, an adapter board 6 needs to be introduced to connect the first ends 951 and the second ends 952. Therefore, based on the foregoing embodiments, the magnetic element of this embodiment further includes the adapter board 6. Furthermore, the first ends 951 and the second ends 952 of the bendable substrate 95 corresponding to the first magnetic column 91 and the second magnetic column 92 may share the same adapter board 6. Even if the pads located at the first ends 951 and the second ends 952 for connecting with the adapter board 6 have a large relative positional tolerance, the corresponding pads on the adapter board 6 can be set as large as possible to cover the relative positional tolerance of the first ends 951 and the second ends 952. As shown in FIGS. 20 and 21, a first power pad 66 and a third power pad 68 of the adapter board 6 can be respectively connected with the thirteenth power pad 213 and the sixteenth power pad 216 on the first ends 951 and the second ends 952 of the bendable substrate 95, and a second power pad 67 of the adapter board 6 is connected with the fourteenth power pad 214 and the fifteenth power pad 215 on the first ends 951 and the second ends 952 of the bendable substrate 95. Since the first power pad 66 and the second power pad 67 of the adapter board 6 are located on a first metal wiring layer 61 of the adapter board 6 and are independent of each other, it is necessary to connect the first power pad 66 and the second power pad 67 together through a second metal wiring layer 62 of the adapter board 6. Similarly, the first ends 951 and the second ends 952 of the bendable substrate 95 corresponding to the second magnetic column 92 are connected through a third metal wiring layer 63 and a fourth metal wiring layer 64 of the adapter board 6. Other connection manners are also possible, and the connection manner is not limited to the connection manner shown in FIG. 20.

With reference to the foregoing embodiments, the crossed traces of the two-layer secondary winding are realized on the first carrier board 81. In this embodiment, the first power pad 21, the second power pad 22, the third power pad 23 and the fourth power pad 24 of the magnetic element are disposed at the same end, the windings can be crossed on the bendable substrate 95, and then directly led out through the wiring of the first carrier board 81, without the need to realize the crossed traces through the first carrier board 81, thereby effectively saving the resource of the first carrier board 81.

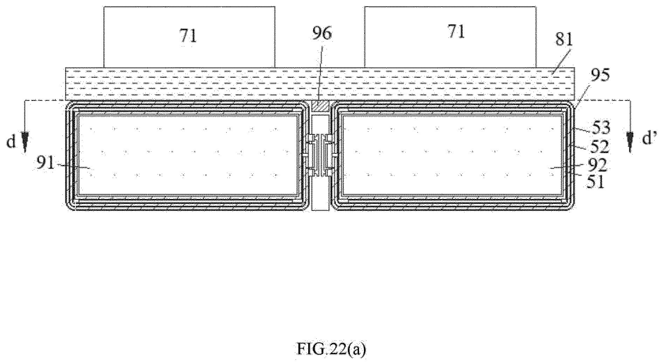

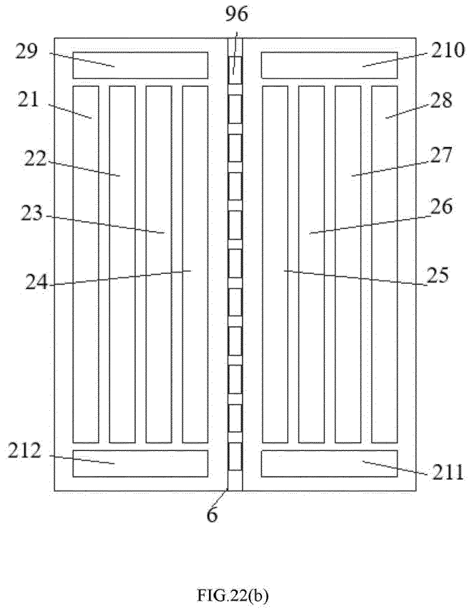

In addition, a height of the adapter board 6 is set to be lower than the upper surface of the magnetic element, so some passive elements 96, such as resistors, capacitors, etc., can be disposed in hollow positions, as shown in FIGS. 22(a) and 22(b). FIG. 22(a) is a cross-sectional view of a power module along a thickness direction, and FIG. 22(b) is a top view of a power module along d-d'. To realize voltage conversion through the power module, a certain number of input capacitors are required, and the input capacitors are provided between the adapter board and the first carrier board 81. Compared with disposing the input capacitors on a system board, the loop inductance of input loop can be effectively reduced, the input impedance is reduced, and the efficiency is improved.

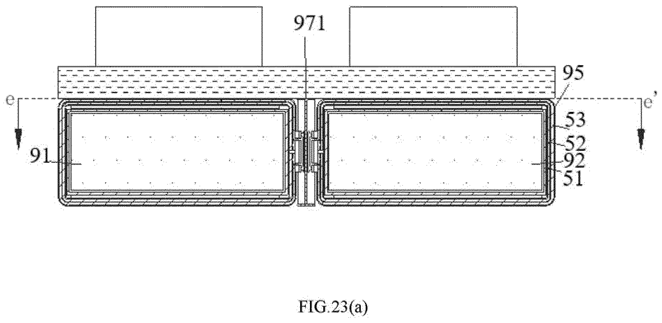

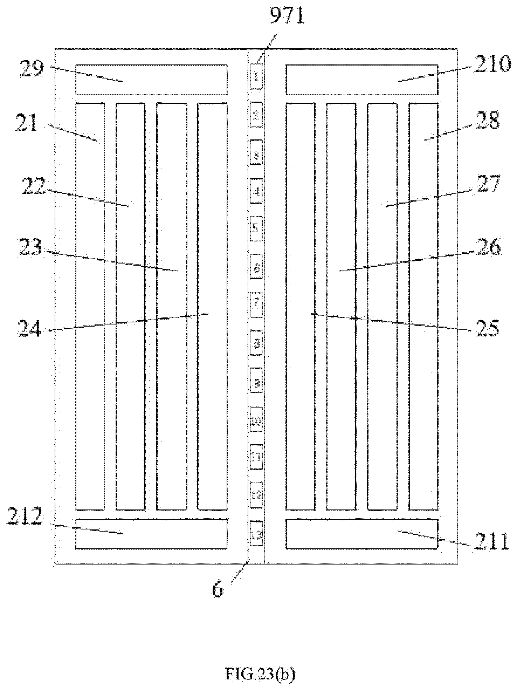

In addition, pads may be disposed on upper and lower surfaces of the adapter board 6, as shown in FIGS. 23(a) and 23(b). FIG. 23(a) is a cross-sectional view of a power module along a thickness direction, and FIG. 23(b) is a top view of a power module along e-e'. Referring to FIG. 23(b), pads 1 to 13 can carry a drive signal, a control signal, a power signal or the like. A plurality of signal pads can be disposed on the adapter board 6, and the plurality of signal pads are arranged in a first direction. In this way, only traces of the secondary winding need to be disposed on the bendable substrate 95, and only secondary power pads are formed on the bendable substrate 95, and primary terminals are still led out through conductive pieces, the rest of the required pins can be disposed on the adapter board 6, so that the manufacturing of the bendable substrate 95 in this embodiment is simpler, and the subsequent assembly is also more convenient. Moreover, by making full use of the space of the adapter board 6, it is convenient to lead out the electrodes.

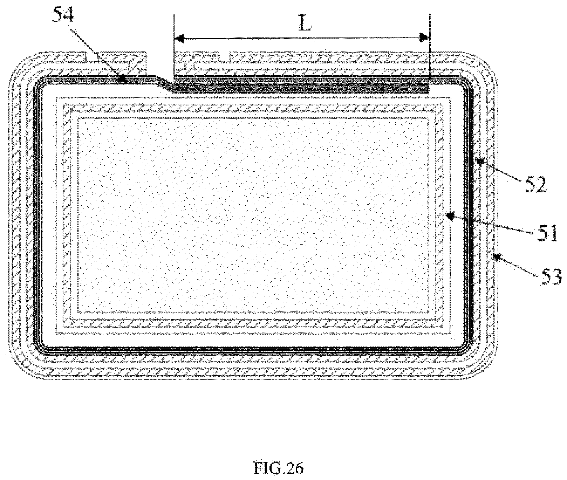

The magnetic element and the power module provided by the present disclosure can be used in a high-voltage insulation application. Taking a magnetic element of a fifth embodiment shown in FIG. 26 as an example below for illustration, a first metal layer 51, a second metal layer 52 and a third metal layer 53 are sequentially disposed from the inside to the outside of the magnetic core. The primary winding is located at the first metal layer 51, and the two secondary windings are located at the second metal layer 52 and the third metal layer 53. The two-layer secondary windings are formed on the bendable substrate, and the primary winding is directly wound around the magnetic column through the copper foil, or formed on the surface of the magnetic column through the metallization process. Since primary and secondary voltages are relatively high, such as up to 3 KV, it is necessary to perform effective insulation treatment between the primary and secondary sides. A possible treatment manner is to press three layers of insulating medium 54 on the surface of the bendable substrate, which can fully satisfy the interlayer insulation between the primary and secondary sides. Considering that an area between the two free ends of the bendable substrate is open and the secondary side is directly exposed to the air, in order to increase a creepage distance L of the primary and secondary sides, the insulating layer at one end of the bendable substrate can be extended to below the other end. The treatment manner of the present disclosure is not limited to the above method, and the insulating medium can also be coated on the surface of the first metal layer to satisfy the insulation requirements of the primary and secondary sides.

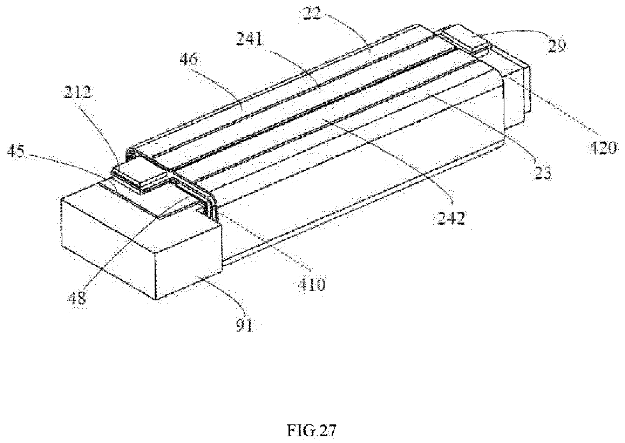

FIG. 27 is a schematic structural diagram of a magnetic element according to a sixth embodiment of the present disclosure. A difference between this embodiment and the first embodiment is that the magnetic element includes a first winding 45, a second winding 46 and a fourth winding 48, and the fourth winding 48 surrounds the outside of a first magnetic column 91 and is at least partially located inside the first winding 45. The fourth winding 48 is a foil winding, and the number of turns of the fourth winding 48 is less than or equal to the number of turns of the first winding 45. The fourth winding 48 has a first projection of the fourth winding on a surface of the first side of the magnetic element, and the first projection of the fourth winding has two boundaries 410, 420 arranged along a first direction. A first projection of a fourth terminal extends from one boundary 410 to the other boundary 420 of the first projection of the fourth winding. The first winding 45 is connected to first terminals 212, 29, and the first terminals 212, 29 have first projections of the first terminals on the surface of the first side of the magnetic element, and the first projections of the first pins are at least partially outside the first projection of the fourth winding.

The fourth winding 48 is connected to fourth terminals 241, 242, which are located on the first side of the magnetic element (the upper surface of the magnetic element as in the perspective of FIG. 27). The fourth terminals 241, 242 have first projections of the fourth pins on the surface of the first side of the magnetic element, the fourth winding 48 has the first projection of the fourth winding on surface of the first side of the magnetic element, and the first projections of the fourth terminals are located within the first projection of the fourth winding. In another embodiment, the fourth terminal is located on a second side of the magnetic element (e.g., the lower surface of the magnetic element in the perspective of FIG. 27), and the fourth terminal has a second projection of the fourth terminal on a surface of the second side of the magnetic element, and the fourth winding 48 has a second projection of the fourth winding on the surface of the second side of the magnetic element. The second projection of the fourth winding has two boundaries arranged along the first direction, the second projection of the fourth terminal extends from one boundary to the other boundary of the second projection of the fourth winding, and the second projection of the fourth terminal is located within the second projection of the fourth winding.

As shown in FIG. 27, the entire second winding 46 is located outside the fourth winding 48, and the second winding 46 is connected to the second terminals 22, 23. The second terminals 22, 23 have first projections of the second terminals on the surface of the first side of the magnetic element, and the first projection of the fourth terminals is located between the first projections of the two second terminals. In yet another embodiment, the fourth terminals and the second terminals are respectively located on the second side of the magnetic element, and the second terminal has a second projection of the second terminal on the surface of the second side of the magnetic element. The second projection of the fourth terminal is located between the second projections of the two second terminal on the surface of the second side of the magnetic element. In another embodiment, the first projection of the fourth winding 48 on the surface of the first side of the magnetic element and the first projection of the second winding 46 on the surface of the first side of the magnetic element coincides, and/or the second projection of the fourth winding 48 on the surface of the second side of the magnetic element and the second projection of the second winding 46 on the surface of the second side of the magnetic element coincides.

In another embodiment, the fourth winding 48 is located at least partially outside the second winding 46. The two fourth terminals and the two second terminals are alternately arranged. In yet another embodiment, the second winding 46 is connected to the second terminals 22, 23, and the two ends of the fourth winding 48 are electrically connected to the two ends of the second terminals 22, 23, respectively. Projections of connections of the fourth winding 48 with the second terminals 22, 23 on the surface of the first side of the magnetic element are at least partially located outside a first projection of the second winding 46, and the second terminals 22 and 23 also serve as terminals of the fourth winding 48.

Compared with the prior art, embodiments of the present disclosure have all or some of the following beneficial technical effects.

Adopting the magnetic element in the embodiments of the present disclosure can avoid the penetration of windings with a large number of turns, reduce the loss of the magnetic element, improve the reliability of the entire power module, and provide the possibility of handling safety insulation.

Replacing PCB through holes with a continuous and complete copper sheet improves copper laying efficiency and reduces loss.

The bendable substrate is bent around an outer surface of the magnetic core to form the winding, and a medium between the formed sidewall windings directly inherits a thickness of the medium before bending, which reduces an interlayer distance of the windings and the volume and footprint of the magnetic element.

The existing materials are used in the magnetic element, which reduces the cost and simplifies the process.

In some embodiments, a magnetic element is provided and includes: a magnetic core, including at least one magnetic column extending along a first direction; a first winding surrounding the at least one magnetic column; a second winding at least partially surrounding the first winding, where the number of turns of the second winding is less than or equal to the number of turns of the first winding; and a third winding at least partially surrounding the second winding, where the number of turns of the third winding is less than or equal to the number of turns of the first winding.

In some embodiments of the forgoing magnetic element, the number of turns of the second winding is greater than or equal to the number of turns of the third winding.

In some embodiments of the forgoing magnetic element, the second winding and the third winding are flatwise-wound windings.

In some embodiments of the forgoing magnetic element, the first winding is connected to a first terminal, and the first terminal is located on a first side of the magnetic element and has a first projection of the first terminal on a surface of a first side of the magnetic element; the second winding and the third winding have a first projection of the second winding and a first projection of the third winding on the surface of the first side of the magnetic element, respectively; and the first projection of the first terminal is at least partially located outside the first projection of the second winding or the first projection of the third winding.

In some embodiments of the forgoing magnetic element, the second winding is connected to a second terminal, and the third winding is connected to a third terminal; the second terminal and the third terminal are located on the first side of the magnetic element and have a first projection of the second terminal and a first projection of the third terminal on the surface of the first side of the magnetic element, respectively.

In some embodiments of the forgoing magnetic element, the first projection of the second terminal is located within the first projection of the second winding; and the first projection of the third terminal is located within the first projection of the third winding.

In some embodiments of the forgoing magnetic element, the first projection of the second winding has two boundaries arranged in the first direction, and the first projection of the second terminal extends from one boundary to the other boundary of the first projection of the second winding; and the first projection of the third winding has two boundaries arranged along the first direction, and the first projection of the third terminal extends from one boundary to the other boundary of the first projection of the third winding.

In some embodiments of the forgoing magnetic element, the second winding is connected to a second terminal, and the third winding is connected to a third terminal; the second terminal and the third terminal are located on a second side of the magnetic element and have a second projection of the second terminal and a second projection of the third terminal on a surface of a second side of the magnetic element, respectively; and the second winding and the third winding have a second projection of the second winding and a second projection of the third winding on the surface of the second side of the magnetic element, respectively.

In some embodiments of the forgoing magnetic element, the second projection of the second terminal is located within the second projection of the second winding; and the second projection of the third terminal is located within the second projection of the third winding.

In some embodiments of the forgoing magnetic element, the second projection of the second winding has two boundaries arranged in the first direction, and the second projection of the second terminal extends from one boundary to the other boundary of the second projection of the second winding; and the second projection of the third winding has two boundaries arranged in the first direction, and the second projection of the third terminal extends from one boundary to the other boundary of the second projection of the third winding.

In some embodiments of the forgoing magnetic element, the surface of the first side of the magnetic element is provided with a plurality of signal terminals, and projections of the plurality of signal terminals on the surface of the first side of the magnetic element do not overlap the first projection of the first terminal, the first projection of the second winding, or the first projection of the third winding.

In some embodiments of the forgoing magnetic element, a surface of a second side of the magnetic element is provided with a plurality of signal terminals; the second winding and the third winding have a second projection of the second winding and a second projection of the third winding on the surface of the second side of the magnetic element, respectively; and projections of the plurality of signal terminals on the surface of the second side of the magnetic element do not overlap the second projection of the second winding or the second projection of the third winding.

In some embodiments of the forgoing magnetic element, the magnetic core includes two magnetic columns, an outside of each magnetic column is wounded with one first winding, one second winding and one third winding, and the outermost windings of the two magnetic columns are connected through an adhesive.

In some embodiments of the forgoing magnetic element, the first winding is a primary winding, and the second winding and the third winding are secondary windings.

In some embodiments of the forgoing magnetic element, the secondary windings include two secondary windings, a part of the second winding and a part of the third winding are one of the two secondary windings, the other part of the second winding and the other part of the third winding are the other of the two secondary windings.

In some embodiments of the forgoing magnetic element, the second winding and the third winding are formed by a bendable substrate; or the second winding and the third winding are integrally formed.

In some embodiments of the forgoing magnetic element, the first winding is connected to a first terminal, and the first terminal includes a connection structure surface-mounted on the first winding; the second winding is connected to a second terminal and the third winding is connected to a third terminal; the first terminal, the second terminal and the third terminal are located on a first side of the magnetic element; and an upper surface of the connection structure, an upper surface of the second terminal and an upper surface of the third terminal are coplanar.

In some embodiments of the forgoing magnetic element, a second insulating layer is between the first winding and the second winding, and a third insulating layer is between the second winding and the third winding; and where at least one of the second insulating layer and the third insulating layer has a first end below a second end.

In some other embodiments, a power module is provided and includes: the magnetic element according to any embodiment as described above; a first carrier board at least partially covering a surface of a first side of the magnetic element; a first switch, located on a surface of a side of the first carrier board away from the magnetic element; and a second switch, located on the surface of the side of the first carrier board away from the magnetic element.

In some embodiments of the forgoing power module, it includes at least two first switches and at least two second switches, and the at least two first switches and the at least two second switches are alternately distributed along the first direction.

In some embodiments of the forgoing power module, the first switches are distributed along the first direction to form a first switch row, the second switches are distributed along the first direction to form a second switch tube row, and the first switch row and the second switch row are arranged side by side.

In some embodiments of the forgoing power module, it further includes an adapter board located on a third side of the magnetic element; a terminal of the second winding and a terminal of the third winding are electrically connected to a first transition terminal and a second transition terminal, respectively, the first transition terminal and the second transition terminal are respectively located on a third side of the magnetic element, and connected to the adapter board, respectively.

In some embodiments of the forgoing power module, a plurality of signal terminals are further disposed on a side of the adapter board, and are arranged along the first direction; and a height of the adapter board is lower than a height of a surface of a first side of the magnetic element, and at least one passive element is disposed between the adapter board and the first carrier board.

The present disclosure has been described by the above-mentioned related embodiments, but the above-mentioned embodiments are only examples of the present disclosure.

## Claims

1. A magnetic element, comprising:
a magnetic core (93), comprising at least one magnetic column (91, 92) extending along a first direction (43);
a first winding (45) surrounding the at least one magnetic column (91, 92);
a second winding (46) at least partially surrounding the first winding (45), wherein the number of turns of the second winding (46) is less than or equal to the number of turns of the first winding (45); and
a third winding (47) at least partially surrounding the second winding (46), wherein the number of turns of the third winding (47) is less than or equal to the number of turns of the first winding (45).

2. The magnetic element according to claim 1, wherein the number of turns of the second winding (46) is greater than or equal to the number of turns of the third winding (47).

3. The magnetic element according to claim 1 or 2, wherein the second winding (46) and the third winding (47) are flatwise-wound windings.

4. The magnetic element according to any one of claims 1-3, wherein:
the first winding (45) comprises a first terminal (29, 212) located on a first side of the magnetic element, and a first projection of the first terminal (29, 212) is located on a surface of the first side of the magnetic element;
a first projection of the second winding (46) and a first projection of the third winding (47) are located on the surface of the first side of the magnetic element;
the first projection of the first terminal (29, 212) is at least partially located outside the first projection of the second winding (46) or the first projection of the third winding (47);
the second winding (46) comprises a second terminal (22, 23) located on the first side of the magnetic element, and the third winding (47) comprises a third terminal (21, 24) located on the first side of the magnetic element;
a first projection of the second terminal (22, 23) and a first projection of the third terminal (21, 24) are located on the surface of the first side of the magnetic element;
the first projection of the second terminal (22, 23) is located within the first projection of the second winding (46); and
the first projection of the third terminal (21, 24) is located within the first projection of the third winding (47).

5. The magnetic element according to claim 4, wherein:
the first projection of the second winding (46) has two boundaries (41, 42) arranged in the first direction (43), and the first projection of the second terminal (22, 23) extends from one boundary (41) to another one of the two boundaries (42) of the first projection of the second winding (46); and
the first projection of the third winding (47) has two boundaries (41, 42) arranged along the first direction (43), and the first projection of the third terminal (21, 24) extends from one boundary to the other boundary of the first projection of the third winding (47).

6. The magnetic element according to any one of claims 1-3, wherein:
the second winding (46) comprises a second terminal (26, 27) located on a second side of the magnetic element, and the third winding (47) comprises a third terminal (25, 28) located on a second side of the magnetic element;
a second projection of the second terminal and a second projection of the third terminal are located on a surface of a second side of the magnetic element;
a second projection of the second winding (46) and a second projection of the third winding (47) are located on the surface of the second side of the magnetic element;
the second projection of the second terminal is located within the second projection of the second winding (46); and
the second projection of the third terminal is located within the second projection of the third winding (47).

7. The magnetic element according to claim 6, wherein:
the second projection of the second winding (46) has two boundaries arranged in the first direction (43), and the second projection of the second terminal extends from one boundary to another one of the two boundaries of the second projection of the second winding (46); and
the second projection of the third winding (47) has two boundaries arranged in the first direction (43), and the second projection of the third terminal extends from one boundary to another one of the two boundaries of the second projection of the third winding (47).

8. The magnetic element according to claim 4, further comprising a plurality of signal terminals, wherein
the surface of the first side of the magnetic element is provided with the plurality of signal terminals, and projections of the plurality of signal terminals on the surface of the first side of the magnetic element do not overlap the first projection of the first terminal, the first projection of the second winding (46) or the first projection of the third winding (47); or
a surface of a second side of the magnetic element is provided with the plurality of signal terminals, a second projection of the second winding (46) and a second projection of the third winding (47) are located on the surface of the second side of the magnetic element, and projections of the plurality of signal terminals on the surface of the second side of the magnetic element do not overlap the second projection of the second winding (46) or the second projection of the third winding (47).

9. The magnetic element according to any one of claims 1-8, wherein the magnetic core (93) comprises two magnetic columns (91, 92), an outside of each magnetic column (91, 92) is wounded with one first winding (45), one second winding (46) and one third winding (47), and the outermost windings of the two magnetic columns (91, 92) are connected through an adhesive.

10. The magnetic element according to any one of claims 1-9, wherein the first winding (45) is a primary winding (P), and the second winding (46) and the third winding (47) are secondary windings.

11. The magnetic element according to claim 10, wherein the secondary windings comprise two secondary windings (S1, S2), a part of the second winding (46) and a part of the third winding (47) form one of the two secondary windings, another part of the second winding (46) and another part of the third winding (47) form another one of the two secondary windings.

12. The magnetic element according to any one of claims 1-11, wherein the second winding (46) and the third winding (47) are formed by a bendable substrate; or
the second winding (46) and the third winding (47) are integrally formed.

13. The magnetic element according to any one of claims 1-3, wherein:
the first winding (45) comprises a first terminal comprising a connection structure (87) surface-mounted on the first winding (45);
the second winding (46) comprises a second terminal and the third winding comprises a third terminal;
the first terminal, the second terminal and the third terminal are located on a first side of the magnetic element; and
an upper surface of the connection structure, an upper surface of the second terminal and an upper surface of the third terminal are coplanar.

14. The magnetic element according to any one of claims 1-13, further comprising:
a second insulating layer (542) between the first winding (45) and the second winding (46); and
a third insulating layer (543) between the second winding (46) and the third winding (47),
wherein at least one of the second insulating layer (542) and the third insulating layer (543) has a first end below a second end.

15. A power module, **characterized in** comprising:
the magnetic element according to any one of claims 1-14;
a first carrier board (81) at least partially covering a surface of a first side of the magnetic element;
a first switch (71) located on a surface of a side of the first carrier board away from the magnetic element; and
a second switch (72) located on the surface of the side of the first carrier board away from the magnetic element.

16. The power module according to claim 15, comprising at least two first switches (71) and at least two second switches (72), wherein
the at least two first switches (71) and the at least two second switches (72) are alternately distributed along the first direction (43); or
the first switches (71) are distributed along the first direction (43) to form a first switch row, the second switches (72) are distributed along the first direction (43) to form a second switch row, and the first switch row and the second switch row are arranged side by side.

17. The power module according to any one of claims 15-16, further comprising an adapter board (6) located on a third side of the magnetic element;
wherein a terminal of the second winding (46) and a terminal of the third winding (47) are electrically connected to a first transition terminal and a second transition terminal, respectively, and the first transition terminal and the second transition terminal are located on a third side of the magnetic element, and are connected to the adapter board (6).
